# EUROPÄISCHE PATENTSCHRIFT

(11) **EP 1 253 167 B1**
(45) Veröffentlichungstag und Bekanntmachung des Hinweises auf die Patenterteilung: **22.02.2006**
(21) Anmeldenummer: 02007797.0
(22) Anmeldetag: 06.04.2002
(51) Int. Cl.: C08K 5/04, C08L 21/00

(54) **Kautschukmischung für Laufstreifen von Reifen**
Rubber composition for tire tread
Composition de caoutchouc pour bande de roulement

(30) Priorität: 25.04.2001 DE 10120091
(43) Veröffentlichungstag der Anmeldung: 30.10.2002
(73) Patentinhaber: Continental Aktiengesellschaft, 30165 Hannover (DE)
(72) Erfinder: Meier, Martin, Dr., 59457 Werl (DE); Bertrand, Joachim, Dr., 21258 Heidenau (DE)

(56) Entgegenhaltungen:
- EP-A- 0 537 640
- EP-A- 0 761 734
- EP-A- 0 947 548

## Beschreibung

Die Erfindung betrifft eine mit Schwefel vulkanisierbare Kautschukmischung für Laufstreifen von Reifen. Die Erfindung betrifft ferner einen Reifen, dessen Laufstreifen zumindest zum Teil aus der mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten und der Füllstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt. Eine Verbesserung des Nassgriffs zieht z. B. in der Regel eine Verschlechterung des Rollwiderstandes, der Wintereigenschaften und des Abriebverhaltens nach sich. Um den Konflikt zwischen diesen sich gegensätzlich verhaltenden Reifeneigenschaften zu entschärfen, hat sich fein verteilte gefällte Kieselsäure als Füllstoff in Kautschukmischungen mit Styrol-Butadien-Kautschuk, meist in Kombination mit wenigstens einem anderen Dienelastomer, durchgesetzt. Die Kieselsäure wird allein oder in Kombination mit Ruß eingesetzt.

Zur Verbesserung des Nassgriffs von Reifen ist es außerdem z. B. aus der EP 359 693 B 1 bekannt, dass die Laufstreifenmischung neben anderen Kautschuktypen auch einen Anteil eines Kautschuks mit Nitrilgruppen, wie z. B. Acrylnitril-Isopren-Kautschuk, enthält. Es hat sich aber herausgestellt, dass die Verwendung derartiger Polymere häufig mit einer Verschlechterung des Rollwiderstandes (Erhöhung des tan δ-Wertes bei 60 °C) verbunden ist.

Auch in der EP 0 537 640 A1 werden spezielle Polymere mit Nitrilgruppen für den Einsatz in Kautschukmischungen für Reifenlaufstreifen offenbart, wobei die Reifen einen verbesserten Nassgriff und einen verbesserten Abriebwiderstand aufweisen sollen. Die Polymere basieren auf 40 bis 84 Gew.-% eines konjugierten Diolefins, 15 bis 50 Gew.-% einer vinylsubstituierten aromatischen Verbindung und 1 bis 8 Gew.-% eines olefinisch ungesättigten Nitrils.

Aus der EP 0 947 548 A1 ist es bekannt, als preiswerte Zusatzstoffe, die die Fließfähigkeit von Kautschukmischungen stark erhöhen und die Anvulkanisationszeit verlängern, in Kautschukmischugen für Reifen 0,1 bis 15 phr eines Destillationsrückstandes aus der technischen Trimethylol-propanherstellung einzumischen.

Der vorliegenden Erfindung liegt nun die Aufgabe zugrunde, mit Schwefel vulkanisierbare Kautschukmischungen, insbesondere für Laufstreifen von Reifen, bereitzustellen, die nach der Vulkanisation einen verbesserten Nassgriff ohne starke Verschlechterung des Rollwiderstandes aufweisen.

Gelöst wird diese Aufgabe erfindungsgemäß dadurch, dass die Kautschukmischung
- 5 bis 100 phr (Gewichtsteile bezogen auf 100 Gewichtsteile der gesamten Kautschuke in der Mischung) zumindest eines Dienkautschuks mit polaren Gruppen,
- 0 bis 95 phr zumindest eines weiteren Kautschukes aus der Gruppe der Dienkautschuke,
- 5 bis 105 phr Kieselsäure,
- 0 bis 80 phr Ruß,
- 1 bis 40 phr zumindest einer nichtaromatischen, polaren Substanz mit bis zu 22 Kohlenstoffatomen, die ausschließlich auf den Elementen Kohlenstoff, Wasserstoff und Sauerstoff basiert, die einen Bereich von mindestens zwei chemisch verbundenen Kohlenstoffatomen aufweist und die eine Hydroxylgruppe und zumindest eine weitere Sauerstoff enthaltende Gruppe ausgewählt aus Hydroxyl-, Ester-, Ether-, Acetal-, Ketal-, Aldehyd- und Carbonsäuregruppen enthält, wobei die Hydroxylgruppe und die weitere Sauerstoff enthaltende Gruppe nicht mehr als 3 Positionen entlang einer Molekülkette voneinander entfernt sind, enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise kann durch die gleichzeitige Verwendung von einem Dienkautschuk mit polaren Gruppen, Kieselsäure und zumindest einer nichtaromatischen, polaren Substanz mit einem speziellen chemischen Aufbau erreicht werden, dass die Vulkanisate aus derartigen Kautschukmischungen einen deutlich verbesserten Nassgriff bei gleichzeitig noch guten Rollwiderstandwerten aufweisen. Dieser Effekt könnte darin begründet liegen, dass die nichtaromatische, polare und im Molekulargewicht recht niedrig liegende Substanz mit ihren Sauerstoff enthaltenden Gruppen sowohl mit der Kieselsäure als auch mit dem Kautschuk mit den polaren Gruppen wechselwirken kann und damit quasi als Vermittler zwischen Kieselsäure und Kautschukmolekülen wirkt.

Die Verwendung der speziellen nichtaromatischen, polaren Substanzen bringt zusätzlich den Vorteil, dass sie, wie bereits z. B. aus der EP 0761 734 A1 bekannt, die Viskosität der Kieselsäure enthaltenden Mischung herabsetzt. Beim Einsatz von gefällter Kieselsäure anstelle von Ruß in Kautschukmischungen wird nämlich üblicherweise eine erhöhte Mischungsviskosität beobachtet, die eine schlechte Mischungsverarbeitung mit sich bringt. Dem wird durch die Zudosierung der polaren Substanzen entgegengewirkt. Die Substanzen sind außerdem toxikologisch unbedenklich.

Durch die Verwendung von 1 bis 20 phr der nichtaromatischen, polaren Substanz konnten die besten Ergebnisse hinsichtlich der Reifeneigenschaften und der Verarbeitungsverhaltens erzielt werden.

Gemäß einer bevorzugten Weiterbildung der Erfindung weist die nichtaromatische, polare Substanz in einem Bereich zumindest zwei Hydroxylgruppen auf, die als 1,2- oder 1,3-Diol vorliegen. Diese spezielle Anordnung von zumindest zwei Hydroxylgruppen in dem Molekül scheint für ein gutes Zusammenwirken mit der Kieselsäure und dem Dienkautschuk mit den polaren Gruppen besonders vorteilhaft zu sein, so dass mit diesen Substanzen besonders positive Effekte auf die Lösung des Konflikts zwischen Nassgriff und Rollwiderstand erzielt werden können.

Als besonders wirksam im Hinblick auf die gewünschten Reifeneigenschaften hat sich Verwendung von Substanzen herausgestellt, bei denen die Sauerstoffatome ausschließlich als Hydroxylgruppen vorliegen. Aus der Gruppe dieser Substanzen kommen insbesondere 1,2-Pentandiol, 2-Methyl-2-propyl-1,3-propandiol, 2-Butyl-2-ethyl-1,3-propandiol, 1,1,1-Trimethylolpropan (2-Ethyl-2-(hydroxymethyl)-1,3-propandiol), Glycerin, Pentaerythrit, Erythrit, Xylit, Sorbit, Mannit und Inosit in Frage, wobei der Einsatz von 1,1,1-Trimethylolpropan wegen seiner besonders hohen viskositätsenkenden Wirkung besonders bevorzugt ist.

Gemäß einer vorteilhaften Ausbildung der Erfindung enthält die Kautschukmischung 10 bis 50 phr zumindest eines Dienkautschukes mit polaren Gruppen. Der restliche Kautschukanteil in der Mischung kann von beliebigen anderen Kautschuktypen, die z. B. preiswerter sind oder andere Reifeneigenschaften, wie die Traktion auf eisiger und schneeiger Straße, positiv beeinflussen, gebildet werden, wobei durch die Verwendung von 10 bis 50 phr des Dienkautschukes mit polaren Gruppen in der erfindungsgemäßen Kautschukmischung ein ausgewogenes Verhältnis zwischen gutem Nassgriff und anderen gewünschten Reifeneigenschaften erzielt werden kann.

Die polaren Gruppen des Dienkautschuks können gleich oder verschieden sein. D. h., der Kautschuk kann an seinen Polymermolekülen nur z. B. Nitrilgruppen als polare Gruppen aufweisen (z. B. Acrylnitril-Butadien-Kautschuk) oder entlang der Polymerkette befinden sich unterschiedliche polare Gruppen, wie z. B. Nitril- und Carboxylgruppen in carboxyliertem Acrylnitril-Butadien-Kautschuk. Derartige Kautschuke können.z. B. dadurch hergestelt werden, dass bei der Polymerisationsreaktion in Lösung oder Emulsion z. B. ungesättigte Carbonsäuren, Acrylnitril oder andere Substanzen mit polaren Gruppen mit einpolymerisiert werden. Als vorteilhaft hat es sich erwiesen, wenn die polaren Gruppen ausgwählt sind aus Nitril-, Hydroxyl-, Carbonyl-, Carboxyl-, Epoxy- und Silanolgruppen. Die Epoxygruppen können dabei in die Polymerhauptkette und/oder -seitenkette eingebunden und/oder endständig an Haupt- und Seitenketten gebunden sein. Die genannten Gruppen ermöglichen eine gute Wechselwirkung mit den Gruppen der nichtaromatischen, polaren Substanz. Kautschuke mit solchen Gruppen sind auch in großen Mengen herstell- und verfügbar.

Als Dienkautschuk mit den polaren Gruppen wird bevorzugt ein Acrylnitril-Styrol-Butadien-Terpolymer eingesetzt, welches einen sehr guten Nassgriff bei höheren Temperaturen bewirkt. Außerdem zieht die Verwendung dieses Kautschukes eine vorteilhafte niedrige Mischungsviskosität nach sich. Die Verarbeitbarkeit ist besser und trotzdem erhält man Vulkanisate mit einer hohen Festigkeit.

Die schwefelvernetzbare Kautschukmischung kann neben dem Dienkautschuk mit den polaren Gruppen weitere unterschiedlichste dem Fachmann bekannte Dienkautschuke enthalten. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke in Mengen von 50 bis 90 phr eingesetzt werden und ausgewählt ist bzw. sind aus der Gruppe, bestehend aus Naturkautschuk (NR), synthetischem Polyisopren (IR), Polybutadien (BR) und Styrol-Butadien-Copolymer (SBR). Diese Dienelastomere lassen sich gut zu der erfindungsgemäßen Kautschukmischung verarbeiten und zeigen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 %. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 %.

Enthält die Kautschukmischung als Dienkautschuk Polybutadien (BR), kann es sich dabei sowohl um cis-1,4- als auch um Vinyl-Polybutadien (40-90 % Vinyl-Anteil) handeln. Bevorzugt ist die Verwendung von cis-1,4-Polybutadien mit einem cis-i,4-Anteil größer 90 %, welches z. B. durch Lösungspolymerisation in Anwesenheit von Katalysatoren vom Typ der seltenen Erden hergestellt werden kann.

Bei dem Styrol-Butadien-Copolymer kann es sich um lösungspolymerisiertes Styrol-Butadien-Copolymer (S-SBR) mit einem Styrolgehalt bezogen auf das Polymer von ca. 10 bis 45 % und einem Vinylgehalt (Gehalt an 1,2-gebundenem Butadien bezogen auf das gesamte Polymer) von 10 bis 70 % handeln, welches zum Beispiel unter Verwendung von Lithiumalkylen in organischem Lösungsmittel hergestellt werden kann. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 % und es können die aus dem Stand der Technik bekannten Typen, die durch Copolymerisation von Styrol und 1,3-Butadien in wässriger Emulsion erhalten wurden, verwendet werden.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-kautschuk (EPDM), enthalten.

Für die erfindungsgemäße Kautschukmischung können die dem Fachmann bekannten Kieselsäuren, die als Füllstoff für Reifenkautschukmischugen geeignet sind, verwendet werden. Besonders bevorzugt ist es allerdings, wenn eine feinverteilte, gefällte Kieselsäure verwendet wird, die eine Stickstoff-Oberfläche (BET-Oberfläche) (gemäß DIN 66131 und 66132) von 35 bis 350 m²/g, vorzugsweise von 145 bis 270 m²/g, eine CTAB-Oberfläche (gemäß ASTM D 3765) von 30 bis 350 m²/g, vorzugsweise von 120 bis 285 m²/g, ein Porenvolumen (gemäß DIN 66133) von 0,2 bis 3,4 mL/g, vorzugsweise von 0,7 bis 1,7 mL/g, einen mittleren Teilchendurchmesser von 10 bis 150 µm, vorzugsweise 10 bis 100 µm, und eine DBP-Zahl (gemäß ASTM D 2414) von 50 bis 300 mL/100 g, vorzugsweise von 150 bis 250 mL/100 g, aufweist. Derartige Kieselsäuren führen z. B. in Kautschukmischungen für Reifenlaufstreifen zu besonders guten physikalischen Eigenschaften der Vulkanisate. Außerdem können sich Vorteile in der Mischungsverarbeitung durch eine Verringerung der Mischzeit bei gleichbleibenden Produkteigenschaften ergeben, die zu einer verbesserten Produktivität führen. Als Kieselsäuren mit den genannten physikalischen Eigenschaften können z. B. jene des Typs VN3 (Handelsname) der Firma Degussa zum Einsatz kommen.

Zur Verbesserung der Verarbeitbarkeit und zur Anbindung der Kieselsäure an den Dienkautschuk kann man Silan-Kupplungsagenzien in Kautschukmischungen einsetzen.

Die Silan-Kupplungsagenzien reagieren mit den oberflächlichen Silanolgruppen der Kieselsäure während des Mischens des Kautschuks bzw. der Kautschukmischung (in situ) oder bereits vor der Zugabe der Kieselsäure zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, NH₂ oder -Sₓ- (mit x = 2-8). So können als Silan-Kupplungsagens z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Die Silan-Kupplungsagenzien werden in Mengen von 0,2 bis 30 Gewichtsteilen, vorzugsweise 1 bis 15 Gewichtsteilen, bezogen auf 100 Gewichtsteile Kieselsäure eingesetzt, da dann eine optimale Anbindung der Kieselsäure an den oder die Kautschuke erfolgen kann.

Die erfindungsgemäße Kautschukmischung kann bis zu 80 phr, vorzugsweise 5 bis 30 phr, Ruß enthalten. Der Zusatz von Ruß bringt verarbeitungstechnische Vorteile. Die verwendeten Ruße sollten insbesondere folgende Charakteristika aufweisen: DBP-Zahl (ASTM D 2414) 90 bis 200 mL/100 g und CTAB-Zahl (ASTM D 3765) von 80 bis 170 m²/g. Das Verhältnis der Füllstoffe Kieselsäure zu Ruß kann vorteilhafterveise größer oder gleich 3 zu 1 sein.

Die Kautschukmischung kann außerdem noch andere Füllstoffe, wie beispielsweise Aluminiumoxide, Alumosilicate, Kreide, Stärke, Magnesiumoxid, Titandioxid oder Kautschukgele, in üblichen Mengen enthalten.

Des Weiteren kann die erfindungsgemäße Kautschukmischung übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl) p-phenylendiamin (6PPD), N-Isopropyl-N'-phenyl-p-phenylendiamin (IPPD), 2,2,4-Trimetbyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Verarbeitungshilfsmittel und Weichmacher, wie z. B. Zinkoxid und Fettsäuren (z. B. Stearinsäure), aromatische, naphthenische und/oder paraffinische Prozessöle, Rapsöl, Wachse und Harze, und Mastikationshilfsmittel, wie z. B. 2,2'-Dibenzamidodiphenyldisulfid (DBD).

Die Vulkanisation wird in Anwesenheit von Schwefel oder Schwefelspendem durchgeführt, wobei einige Schwefelspender zugleich als Vulkanisationsbeschleuniger wirken können. Als Schwefelspender können dabei beispielsweise Thiuramderivate wie Tetramethylthiuramdisulfid und Dipentamethylenthiuramtetrasulfid, Morpholinderivate wie Dimorpholyldisulfid, Dimorpholyltetrasulfid und 2-Morpholinodithiobenzothiazol sowie Caprolactamdisulfid verwendet werden. Schwefel oder Schwefelspender werden im letzten Mischungschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen, wie Vulkanisationsbeschleuniger, Vulkanisationsverzögerer und Vulkanisationsaktivatoren, in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid, Guanidinbeschleuniger wie z. B. Diphenylguanidin, Thiurambeschleuniger wie z. B. Tetrabenzylthiuramdisulfid, Dithiocarbamatbeschleuniger wie z. B. Zinkdibenzyldithiocarbamat, Aminbeschleuniger wie z. B. Cyclohexylethylamin, Thioharnstoffe wie z. B. Ethylenthioharnstoff, Xanthogenatbeschleuniger, Disulfide. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise in einer oder mehreren Mischstufen. Anschließend wird diese weiterverarbeitet z. B. durch einen Extrusionsvorgang und in die entsprechende Form eines Laufstreifenrohlings gebracht. Ein so erzeugter Laufstreifenmischungsrohling wird bei der Herstellung des Reifenrohlings, insbesondere Fahrzeugluftreifenrohlings, wie bekannt aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Nach der Vulkanisation des Fabrzeugreifens weist der Reifen einen sehr guten Nassgriff bei noch gutem Rollwiderstand auf. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche aus der erfindungsgemäßen Kautschukmischung hergestellt worden ist.

Die Erfindung soll nun anhand von Vergleichs- und Ausführungsbeispielen, die in der Tabelle 1 zusammengefasst sind, näher erläutert werden.

Bei sämtlichen in der Tabelle 1 enthaltenen Mischungsbeispielen sind die angebenen Mengenangaben Gewichtsteile, die auf 100 Gewichtsteile Gesamtkautschuk bezogen sind (phr). Die Vergleichsmischungen sind mit V gekennzeichnet, die erfindungsgemäße Mischung ist mit E gekennzeichnet. Die vier Mischungen unterscheiden sich dadurch, dass in den Mischungen V1 und V3 Styrol-Butadien-Copolymers enthalten ist, in den Mischungen V2 und E1 dagegen der Anteil des Styrol-Butadien-Copolymers durch Acrylnitril-Styrol-Butadien-Terpolymer ersetzt ist. Da das Terpolymer im Gegensatz zum Copolymer nicht mit Öl verstreckt ist, wurde die zudosierte Menge an purem aromatischen Öl in den Mischungen V2 und E1 entsprechend erhöht. Die Mischungen V3 und E1 enthalten zusätzlich 1,1,1-Trimethylolpropan. Die übrigen Mischungsbestandteile sind in sämtlichen in der Tabelle 1 aufgeführten Mischungen in identischen Mengen enthalten.

Die Mischungen wurden bei 160 °C vulkanisiert und der Vulkanisationsprozess über ein rotorloses Vulkameter (MDR = Moving Disc Rheometer) gemäß DIN 53 529 verfolgt. Daraus wurden die Umsatzzeiten bis zum Erreichen der relativen Vernetzungsgrade von 10, 40 und 90 % (t₁₀, t₄₀, t₉₀) ermittelt.

Außerdem wurde die Mooney-Viskosität der Mischungen gemäß DIN 53 523 mit einem Scherscheiben-Viskosimeter bei 100 °C ermittelt.

Aus den Mischungen wurden Prüfkörper durch optimale Vulkanisation in einer Presse bei 160 °C hergestellt und mit diesen danach für die Kautschukindustrie typische Materialeigenschaften bestimmt. Für die Tests an Prüfkörpern wurden folgende Testverfahren angewandt:
- Zugfestigkeit bei Raumtemperatur gemäß DIN 53 504
- Bruchdehnung bei Raumtemperatur gemäß DIN 53 504
- Spannungswert bei 100, 200 und 300 % Dehnung bei Raumtemperatur gemäß DIN 53 504
- Shore-A-Härte bei Raumtemperatur und 70 °C gemäß DIN 53 505
- Rückprallelastizität bei Raumtemperatur und 70 °C gemäß DIN 53 512
- Verlustfaktor tan δ bei 0 und 60 °C gemäß DIN 53 513

Der tan δ-Wert bei 0 °C läßt Rückschlüsse auf den Nassgriff zu. Je größer der tan δ-Wert bei 0 °C, desto besser ist der Nassgriff. Aus dem tan δ bei 60 °C kann man auf den Rollwiderstand eines Vulkanisates, z. B. eines Fahrzeugluftreifens, schließen. Je kleiner der tan δ-Wert bei 60 °C, desto geringer ist der Rollwiderstand.

Die ermittelten Werte der Materialeigenschaften finden sich in Tabelle 2.

**Tabelle 1**

| **Bestandteile** | **Einheit** | **V1** | **V2** | **V3** | **E1** |
|---|---|---|---|---|---|
| Naturkautschuk | phr | 10 | 10 | 10 | 10 |
| cis-1,4-Polybutadien^{a} | phr. | 45 | 45 | 45 | 45 |
| S-SBR^{b} | phr | 61,876 | - | 61,876 | - |
| Acrylnitril-Styrol-Butadien- | phr | - | 45 | - | 45 |
| Terpolymer^{c} | | | | | |
| Kieselsäure | phr | 80 | 80 | 80 | 80 |
| Ruß N339 | phr | 10 | 10 | 10 | 10 |
| Aromatische Öle | phr | 11,1 | 27,985 | 11,1 | 27,985 |
| Rapsöl | phr | 5 | 5 | 5 | 5 |
| Alterungsschutzmittel | phr | 2 | 2 | 2 | 2 |
| Ozonschutzwachs | phr | 2 | 2 | 2 | 2 |
| 1,1,1-Trimethylolpropan | phr | - | - | 4 | 4 |
| Zinkoxid | phr | 2 | 2 | 2 | 2 |
| Stearinsäure | phr | 1 | 1 | 1 | 1 |
| Verarbeitungshilfsmittel | phr | 4 | 4 | 4 | 4 |
| Silan-Kupplungsagenz auf Ruß^{d} | phr | 12,5 | 12,5 | 12,5 | 12,5 |
| Beschleuniger | phr | 3,5 | 3,5 | 3,5 | 3,5 |
| Schwefel | phr | 2 | 2 | 2 | 2 |

| | | | | | |
|---|---|---|---|---|---|
| ^{a}cis-1,4-Polybutadien. Bayer AG, Deutschland | | | | | |
| ^{b} lösungspolymerisiertes Styrol-Butadien-Copolymer verstreckt mit 37,5 Teilen Öl auf 100 Teile Kautschuk, VSL-5025-1, Bayer AG, Deutschland | | | | | |
| ^{c}Gehalt an AcryInitril: 20 %, Gehalt an Styrol: 20 % | | | | | |
| ^{d} X50S, Degussa AG, Deutschland | | | | | |

**Tabelle 2**

| **Materialeigenschaften** | **Einheit** | **V1** | **V2** | **V3** | **E1** |
|---|---|---|---|---|---|
| t₁₀ | min | 1,70 | 1,60 | 2,65 | 2,81 |
| t₄₀ | min | 4,63 | 3,71 | 4,15 | 4,08 |
| t₉₀ | min | 10,12 | 7,11 | 8,56 | 9,64 |
| Mooney-Viskosität | | 72,2 | 61,0 | 56,3 | 46,8 |
| ML (1+3) 100 °C | | | | | |
| Zugfestigkeit bei RT | MPa | 15,7 | 15,3 | 12,9 | 15,5 |
| Bruchdehnung bei RT | % | 462 | 469 | 338 | 373 |
| Spannungswert 100 % | MPa | 2,52 | 3,20 | 3,40 | 4,10 |
| Spannungswert 200 % | MPa | 5,82 | 6,80 | 7,68 | 8,71 |
| Spannungswert 300 % | MPa | 10,02 | 10,64 | 12,89 | 13,55 |
| Shore-A-Härte bei RT | Shore A | 67,5 | 73,1 | 71,6 | 75,7 |
| Shore-A-Härte bei 70 °C | Shore A | 63,1 | 67,7 | 69,4 | 71,2 |
| Rückprallelastizität bei RT | % | 33,7 | 18,3 | 34,4 | 21,7 |
| Rückprallelastizität bei 70 °C | % | 49,1 | 41,5 | 52,6 | 44,5 |
| tan δ bei 0°C | | 0,378 | 0,427 | 0,364 | 0,456 |
| tan δ bei 60°C | | 0,171 | 0,213 | 0,158 | 0,187 |

Ersetzt man in einer Mischung gemäß V1 das Styrol-Butadien-Copolymer durch Acrylnitril- Styrol-Butadien-Terpolymer (Mischung V2), so wird das Nassgriffverhalten stark verbessert, was aus dem erhöhten tan δ-Wert bei 0 °C zu entnehmen ist. Gleichzeitig verschlechtert sich der Rollwiderstand jedoch erheblich, wie dem erhöhten tan δ-Wert bei 60 °C zu entnehmen ist.

Gibt man zu einer Mischung gemäß V1 noch zusätzlich eine nichtaromatische, polare Substanz wie 1,1,1-Trimethylolpropan (Mischung V3), so verschlechtert sich der Nassgriff (niedrigerer tan δ-Wert bei 0 °C), der Rollwiderstand wird aber leicht verbessert (niedrigerer tan δ-Wert bei 60 °C). Außerdem wird die durch die Zugabe von 1,1,1-Trimethylolpropan die Viskosität der Mischung stark herabgesetzt.

Verwendet man nun gemäß der Erfindung (Mischung E1) in einer Kieselsäure enthaltenden Mischung sowohl Acrylnitril- Styrol-Butadien-Terpolymer (Dienkautschuk mit polaren Gruppen) als auch 1,1,1-Trimethylolpropan (nichtaromatische, polare Substanz), so stellt man überraschenderweise fest, dass der Nassgriff nochmals gegenüber einer Mischung gemäß V2 verbessert wird und der Rollwiderstand auf einem akzeptablen Niveau verbleibt. Zusätzlich weist eine solche Mischung eine niedrige Viskosität auf und kann dadurch besser verarbeitet werden.

## Patentansprüche

1. Mit Schwefel vulkanisierbare Kautschukmischung, insbesondere für Laufstreifen von Reifen, enthaltend
- 5 bis 100 phr (Gewichtsteile bezogen auf 100 Gewichtsteile der gesamten Kautschuke in der Mischung) zumindest eines Dienkautschuks mit polaren Gruppen, die gleich oder verschieden sind und ausgewählt sind aus Nitril-, Hydroxyl-, Carbonyl-, Carboxyl-, Epoxy- und Silanolgruppen,
- 0 bis 95 phr zumindest eines weiteren Kautschukes aus der Gruppe der Dienkautschuke,
- 5 bis 105 phr Kieselsäure,
- 0 bis 80 phr Ruß,
- 1 bis 40 phr zumindest einer nichtaromatischen, polaren Substanz mit bis zu 22 Kohlenstoffatomen,
- die ausschließlich auf den Elementen Kohlenstoff, Wasserstoff und Sauerstoff basiert,
- die einen Bereich von mindestens zwei chemisch verbundenen Kohlenstoffatomen aufweist und
- die eine Hydroxylgruppe und zumindest eine weitere Sauerstoff enthaltende Gruppe ausgewählt aus Hydroxyl-, Ester-, Ether-, Acetal-, Ketal-, Aldehyd- und Carbonsäuregruppen enthält, wobei die Hydroxylgruppe und die weitere Sauerstoff enthaltende Gruppe nicht mehr als 3 Positionen entlang einer Molekülkette voneinander entfernt sind.

2. Kautschukmischung nach Anspruch 1, **dadurch gekennzeichnet, dass** sie 1 bis 20 phr der nichtaromatischen, polaren Substanz enthält.

3. Kautschukmischung nach Anspruch 1 oder 2, **dadurch gekennzeichnet, dass** die nichtaromatische, polare Substanz in einem Bereich zumindest zwei Hydroxylgruppen aufweist, die als 1,2- oder 1,3-Diol vorliegen.

4. Kautschukmischung nach zumindest einem der Ansprüche 1 bis 3, **dadurch gekennzeichnet, dass** die Sauerstoffatome der nichtaromatischen, polaren Substanz ausschließlich in Hydroxylgruppen vorliegen.

5. Kautschukmischung nach Anspruch 4, **dadurch gekennzeichnet, dass** die nichtaromatische, polare Substanz ausgewählt ist aus der Gruppe bestehend aus 1,2-Pentandiol, 2-Methyl-2-propyl-1,3-propandiol, 2-Butyl-2-ethyl-1,3-propandiol, 1,1,1-Trimethylolpropan (2-Ethyl-2-(hydroxymethyl)-1,3-propandiol), Glycerin, Pentaerythrit, Erythrit, Xylit, Sorbit, Mannit und Inosit.

6. Kautschukmischung nach zumindest einem der Ansprüche 1 bis 5, **dadurch gekennzeichnet, dass** sie 10 bis 50 phr zumindest eines Dienkautschukes mit polaren Gruppen enthält.

7. Kautschukmischung nach zumindest einem der Ansprüche 1 bis 6, **dadurch gekennzeichnet, dass** der Dienkautschuk mit den polaren Gruppen ein Acrylnitril-Styrol-Butadien-Terpolymer ist.

8. Kautschukmischung nach zumindest einem der Ansprüche 1 bis 7, **dadurch gekennzeichnet, dass** sie als weiteren Kautschuk 50 bis 90 phr zumindest eines Kautschukes ausgewählt aus der Gruppe bestehend aus Naturkautschuk, synthetischem Polyisopren, Polybutadien und Styrol-Butadien-Copolymer enthält.

9. Reifen, dessen Laufstreifen zumindest zum Teil aus einer mit Schwefel vulkanisierten Kautschukmischung nach zumindest einem der Ansprüche 1 bis 8 besteht.

## Claims

1. Rubber blend vulcanizable with sulphur, in particular for tyre treads, containing
- 5 to 100 phr (parts by weight based on 100 parts by weight of the total rubbers in the blend) of at least one diene rubber having polar groups which are identical or different and are selected from nitrile, hydroxyl, carbonyl, carboxyl, epoxy and silanol groups,
- 0 to 95 phr of at least one further rubber from the group consisting of the diene rubbers,
- 5 to 105 phr of silica,
- 0 to 80 phr of carbon black,
- 1 to 40 phr of at least one nonaromatic, polar substance having up to 22 carbon atoms,
- which is based exclusively on the elements carbon, hydrogen and oxygen,
- which has a region of at least two chemically bonded carbon atoms and
- which contains a hydroxyl group and at least one further oxygen-containing group selected from hydroxyl, ester, ether, acetal, ketal, aldehyde and carboxyl groups, the hydroxyl group and the further oxygen-containing group being not more than 3 positions apart along a molecular chain.

2. Rubber blend according to Claim 1, **characterized in that** it contains 1 to 20 phr of the nonaromatic, polar substance.

3. Rubber blend according to Claim 1 or 2, **characterized in that** the nonaromatic, polar substance has, in a region, at least two hydroxyl groups which are present as 1,2- or 1,3-diol.

4. Rubber blend according to at least one of Claims 1 to 3, **characterized in that** the oxygen atoms of the nonaromatic, polar substance are present exclusively in hydroxyl groups.

5. Rubber blend according to Claim 4, **characterized in that** the nonaromatic, polar substance is selected from the group consisting of 1,2-pentanediol, 2-methyl-2-propyl-1,3-propanediol, 2-butyl-2-ethyl-,1,3-propanediol, 1,1,1-trimethylolpropane (2-ethyl-2-(hydroxymethyl)-1,3-propanediol), glycerol, pentaerythritol, erythritol, xylitol, sorbitol, mannitol and inositol.

6. Rubber blend according to at least one of Claims 1 to 5, **characterized in that** it contains 10 to 50 phr of at least one diene rubber having polar groups.

7. Rubber blend according to at least one of Claims 1 to 6, **characterized in that** the diene rubber having the polar groups is an acrylonitrile-styrene-butadiene terpolymer.

8. Rubber blend according to at least one of Claims 1 to 7, **characterized in that** it contains, as the further rubber, 50 to 90 phr of at least one rubber selected from the group consisting of natural rubber, synthetic polyisoprene, polybutadiene and styrene-butadiene copolymer.

9. Tyre whose tread at least partly comprises a rubber blend vulcanized with sulphur, according to at least one of Claims 1 to 8.

## Revendications

1. Mélange de caoutchoucs vulcanisables au soufre, en particulier pour bande de roulement de bandages de roue, qui contient :
- de 5 à 100 phr (parties en poids pour 100 parties en poids de l'ensemble des caoutchoucs présents dans le mélange) d'au moins un caoutchouc diène à groupes polaires identiques ou différents et sélectionnés parmi les groupes nitrile, hydroxyle, carbonyle, carboxyle, époxy et silanol,
- de 0 à 95 phr d'au moins un autre caoutchouc du groupe des caoutchoucs diène,
- de 5 à 105 phr d'acide silicique,
- de 0 à 80 phr de suie,
- de 1 à 40 phr d'au moins une substance polaire non aromatique qui compte jusque 22 atomes de carbone,
qui est exclusivement basée sur les éléments carbone, hydrogène et oxygène,
qui présente une zone constituée d'au moins deux atomes de carbone liés chimiquement et
qui contient un groupe hydroxyle et au moins un autre groupe qui contient de l'oxygène et sélectionné parmi les groupes hydroxyle, ester, éther, acétal, cétal, aldéhyde et acide carboxylique, le groupe hydroxyle et l'autre groupe qui contient de l'oxygène n'étant pas éloignés l'un de l'autre de plus de 3 positions sur la chaîne de la molécule.

2. Mélange de caoutchoucs selon la revendication 1, **caractérisé en ce qu'**il contient de 1 à 20 phr de la substance polaire non aromatique.

3. Mélange de caoutchoucs selon les revendications 1 ou 2, **caractérisé en ce que** la substance polaire non aromatique présente dans une zone au moins deux groupes hydroxyle qui sont des groupes 1,2- ou 1,3-diol.

4. Mélange de caoutchoucs selon au moins l'une des revendications 1 à 3, **caractérisé en ce que** les atomes d'oxygène de la substance polaire non aromatique sont présents exclusivement dans les groupes hydroxyle.

5. Mélange de caoutchoucs selon la revendication 4, **caractérisé en ce que** la substance polaire non aromatique est sélectionnée dans le groupe constitué du 1,2-pentane diol, du 2-méthyl-2-propyl-1,3-propane diol, du 2-butyl-2-éthyl-1,3-propane diol, du 1,1,1-triméthylolpropane(2-éthyl-2-(hydroxyméthyl)-1,3-propane diol), de la glycérine, du pentaérythritol, de l'érythritol, du xylitol, du sorbitol, du mannitol et de l'inositol.

6. Mélange de caoutchoucs selon au moins l'une des revendications 1 à 5, **caractérisé en ce qu'**il contient de 10 à 50 phr d'au moins un caoutchouc diène à groupes polaires.

7. Mélange de caoutchoucs selon au moins l'une des revendications 1 à 6, **caractérisé en ce que** le caoutchouc diène à groupes polaires est un polymère d'acrylonitrile, de styrène et de butadiène.

8. Mélange de caoutchoucs selon au moins l'une des revendications 1 à 7, **caractérisé en ce qu'**il contient comme autre caoutchouc de 50 à 90 phr d'au moins un caoutchouc sélectionné dans le groupe constitué des caoutchoucs naturels et des polyisoprènes, polybutadiènes et copolymères de styrène-butadiène synthétiques.

9. Bandage pour roue dont au moins une partie de la bande de roulement est constituée d'un mélange de caoutchoucs vulcanisés au soufre selon au moins l'une des revendications 1 à 8.
